# EUROPEAN PATENT SPECIFICATION

(11) **EP 2 495 113 B1**
(45) Date of publication and mention of the grant of the patent: **22.05.2013**
(21) Application number: 11156365.6
(22) Date of filing: 01.03.2011
(51) Int. Cl.: B60C 23/04

(54) **Blank tire pressure monitoring device and its setup method**
Unprogrammierte Reifendrucküberwachungsvorrichtung und Einstellverfahren
Dispositif de surveillance de pression pneumatique et son procédé de configuration

(43) Date of publication of application: 05.09.2012
(73) Proprietor: CUB Elecparts Inc., Changhua County 506 (TW)
(72) Inventor: Yu, San-Chuan, Changhua County (TW); Chiang, Chih-Ming, Kaohsiung City (TW); Hung, Yuan-Tung, Changhua County (TW); Hu, Chao-Ching, Tainan County (TW)
(74) Representative: Becker Kurig Straus

(56) References cited:
- EP-A1- 1 388 437
- WO-A1-2009/006518
- JP-A- 2008 273 477

## Description

### BACKGROUND OF THE INVENTION

### 1. Field of the Invention

The present invention relates to vehicle tire pressuring monitoring technology and more particularly, to a blank tire pressure monitoring device. The invention relates also to a method for setting the blank tire pressure monitoring device with a setup tool.

### 2. Description of the Related Art

In order to know the car condition and to assure a safety driving, tire pressure monitoring means will be installed to monitor the tire pressure and temperature and to provide the monitored data to the driver for reference. The communication program in a regular tire pressure monitoring device was directly programmed therein during the fabrication of the tire pressure monitoring device. However, it may take a long period of time or several methods after the fabrication of a tire pressure monitoring device and before installation of the tire pressure monitoring device in a vehicle tire for application. During this period, the program programmed in the tire pressure monitoring device is not changeable. When a new edition of communication program is issued after the fabrication of a tire pressure monitoring device and before installation of the tire pressure monitoring device in a vehicle tire, the tire pressure monitoring device cannot use this new edition.

Further, US6920785 discloses a tire pressure sensor unit and a method of registering identification code of tire pressure sensor unit. The disclosure teaches rewriting data of self-identification code so that a new tire pressure sensor unit can use the identification code of an old tire pressure sensor unit. However, this invention is not practical due to the following few questions. At first, when the user is going to rewrite the identification code, it is because the old tire pressure sensor unit is failed. However, how can a damaged tire pressure sensor unit transmit its identification code to a new tire pressure sensor unit by a wireless method? Further, the ROM in the cited case is another question. As the ROM (read only memory) does not allow rewriting, how to write an identification code into the ROM? Even if a RAM is used, the stored data will disappear upon a power failure. Thus, the cited case simply discloses an identification code rewriting technique. In actual practice, it is not practical.

WO2009/006518 A1 discloses a blank tire pressure monitoring with an embedded microcontroller module comprising therein a flash memory which can be programmed with a programming device.

EP1388437 A1 teaches a setup tool connectable to a tire pressure monitoring device comprising a terminal unit with a signal exporting terminal, a ground terminal, a data signal terminal and a data input/output control signal terminal.

Further, JP2008-273477 A shows a tire pressure monitor comprising an acceleration sensor installed in a circuit board, an analog-digital converter installed in said circuit board and electrically connected with a pressure sensor, a temperature sensor and said acceleration sensor, a LF (low-frequency) receiver electrically connected to an embedded microcontroller module and a transmitter electrically connected to said embedded microcontroller module.

### SUMMARY OF THE INVENTION

The present invention has been accomplished under the circumstances in view. It is the main object of the present invention to provide a blank tire pressure monitoring device and its setup method, which facilitates use and operation and avoids error.

To achieve this the present invention provides a blank tire pressure monitoring device with the features of claim 1 and a setup tool with the features of claim 5. Further, a blank tire pressure monitoring device setup method with the steps of claim 6 is provided.

### BRIEF DESCRIPTION OF THE DRAWINGS

FIG. 1 is a schematic drawing illustrating the relationship between a blank tire pressure monitoring device and a setup tool according to the present invention.
FIG. 2 is a circuit block diagram of a 315MHz blank tire pressure monitoring device in accordance with a first embodiment of the present invention.
FIG. 3 is a circuit block diagram of a 433MHz blank tire pressure monitoring device in accordance with a second embodiment of the present invention.
FIG. 4 is a circuit block diagram of the setup tool in accordance with the present invention.
FIG. 5 is a circuit block diagram of the present invention, illustrating the 315MHz blank tire pressure monitoring device connected to the setup tool.
FIG. 6 is a circuit block diagram of the present invention, illustrating the 433MHz blank tire pressure monitoring device connected to the setup tool.
FIG. 7 is a schematic circuit block diagram illustrating an example of connection error.

### DETAILED DESCRIPTION OF THE INVENTION

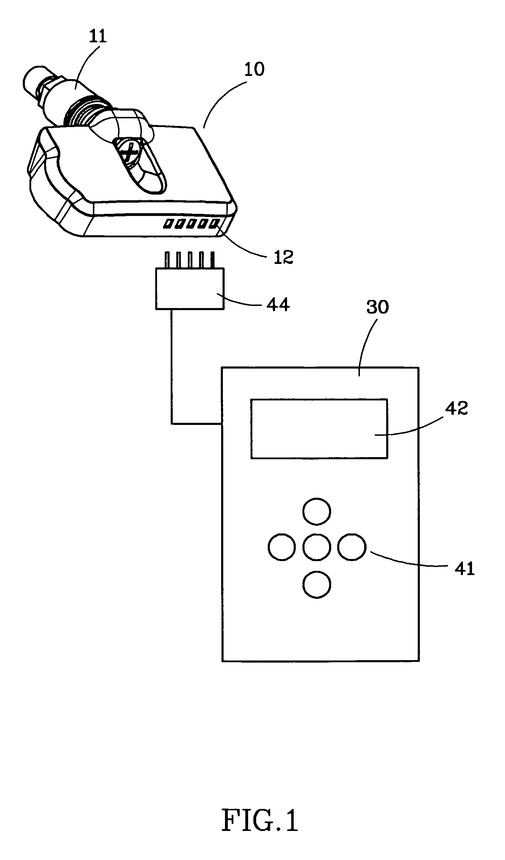

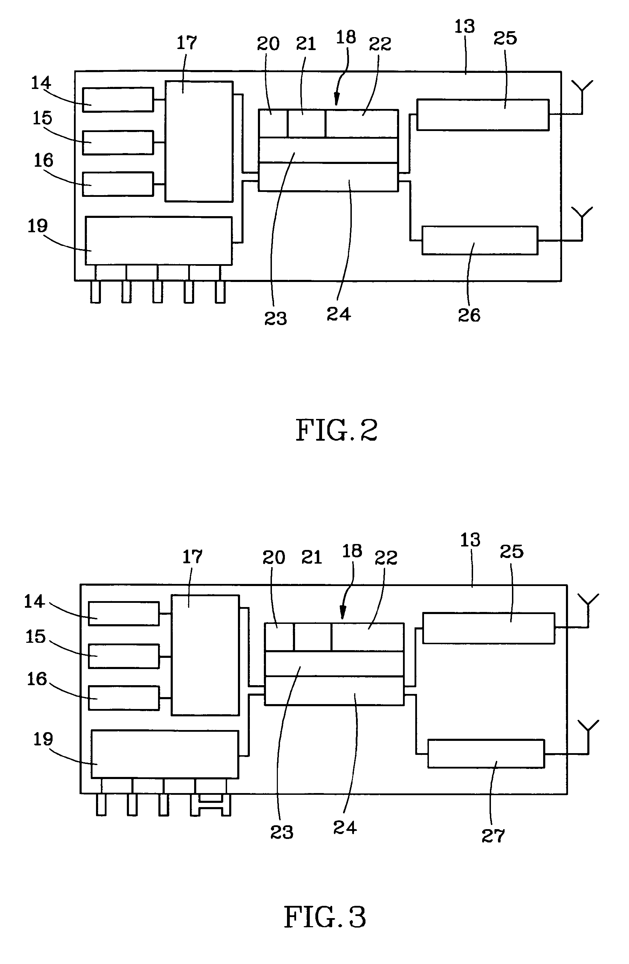

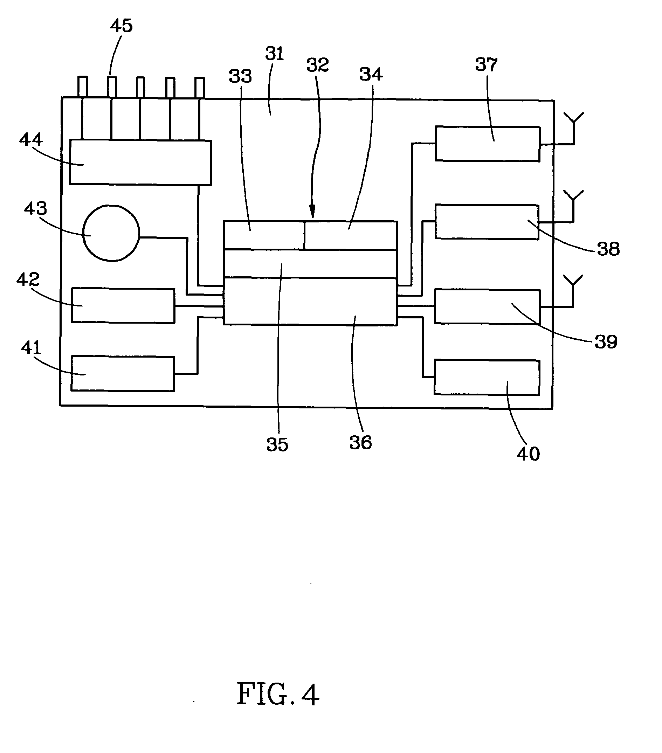

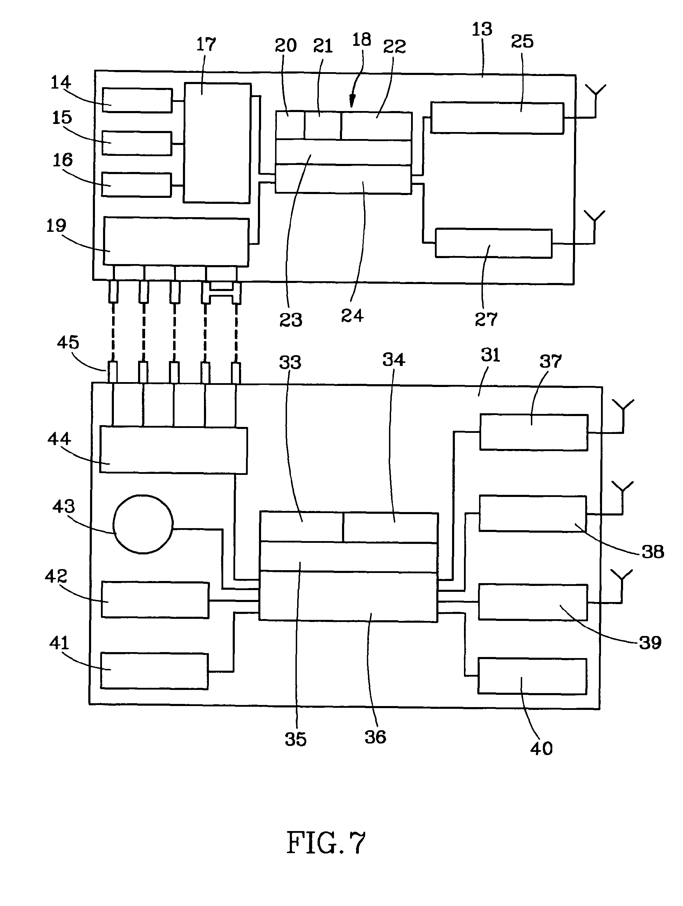

Referring to FIGS. 1 and 2, a blank tire pressure monitoring device in accordance with a first embodiment of the present invention is a 315MHz blank tire pressure monitoring device, comprising:
   a housing **10** having located on one end thereof an air valve **11** and located on an opposite end thereof five connection terminals **12**, namely, the power management terminal, the ground terminal, the data program clock terminal, the program data terminal and the detection terminal for frequency differentiating and error prevention control;
   a circuit board **13** mounted inside the housing **10**;
   a pressure sensor **14** installed in the circuit board **13**;
   a temperature sensor **15** installed in the circuit board **13**;
   an acceleration sensor **16** installed in the circuit board **13**;
   an analog-digital converter **17** installed in the circuit board **13** and electrically connected with the pressure sensor **14**, the temperature sensor **15** and the acceleration sensor **16**;
   a general purpose I/O (input/output) terminal unit **19** electrically connected with the five connection terminals **12** of the housing **10**;
   an embedded microcontroller module **18** electrically connected with the general purpose I/O (input/output) terminal unit **19** and the analog-digital converter **17** and comprising therein a RAM (random access memory) **20**, a flash memory **21**, a ROM (read only memory) **22**, a microcontroller core **23** and a special-function register controller **24**;
   a LF (low-frequency) receiver **25** electrically connected to the embedded microcontroller module **18**;
   a 315MHz transmitter **26** electrically connected to the embedded microcontroller module **18**; and
   a battery (not shown) mounted on the circuit board **13** to provide the blank tire pressure monitoring device with the necessary working power.
FIG. 3 illustrates a blank tire pressure monitoring device in accordance with a second embodiment. According to this second embodiment, the blank tire pressure monitoring device is a 433MHz blank tire pressure monitoring device, comprising:
   a housing **10** having located on one end thereof an air valve **11** and located on an opposite end thereof five connection terminals **12**, namely, the power management terminal, the ground terminal, the data program clock terminal, the program data terminal and the detection terminal for frequency differentiating and error prevention control; further, the detection terminal is electrically conducted with at least one of another four terminals;
   a circuit board **13** mounted inside the housing **10**;
   a pressure sensor **14** installed in the circuit board **13**;
   a temperature sensor **15** installed in the circuit board **13**;
   an acceleration sensor **16** installed in the circuit board **13**;
   an analog-digital converter **17** installed in the circuit board **13** and electrically connected with the pressure sensor **14**, the temperature sensor **15** and the acceleration sensor **16**;
   a general purpose I/O (input/output) terminal unit **19** electrically connected with the five connection terminals **12** of the housing **10;**
   an embedded microcontroller module **18** electrically connected with the general purpose I/O (input/output) terminal unit **19** and the analog-digital converter **17** and comprising therein a RAM (random access memory) **20**, a flash memory **21**, a ROM (read only memory) **22**, a microcontroller core **23** and a special-function register controller **24**;
   a LF (low-frequency) receiver **25** electrically connected to the embedded microcontroller module **18**;
   a 433MHz transmitter **27** electrically connected to the embedded microcontroller module **18**; and
   a battery (not shown) mounted on the circuit board **13** to provide the blank tire pressure monitoring device with the necessary working power.
   The invention also provides a setup tool **30** for setting up the blank tire pressure monitoring device. As shown in FIG. 4, the setup tool **30** comprises a circuit board **31**, an embedded microcontroller module **32**, which is installed in the circuit board **31** and comprises a RAM **33**, a flash memory **34**, a microcontroller core **35** and a special-function register controller **36**, and a transmitter **37**, a 433MHz receiver **38**, a 315MHz receiver **39**, a USB port **40**, a keyboard **41**, a display **42**, a buzzer **43** and a general-purpose I/O terminal unit **44** respectively electrically connected with the embedded microcontroller module **32**. The general-purpose I/O terminal unit **44** comprises five connection terminals **45**. The communication programs of different vehicle models can be stored in the setup tool or a computer. Further, the stored communication programs can be updated through the Internet, assuring each stored communication program to be the latest edition.

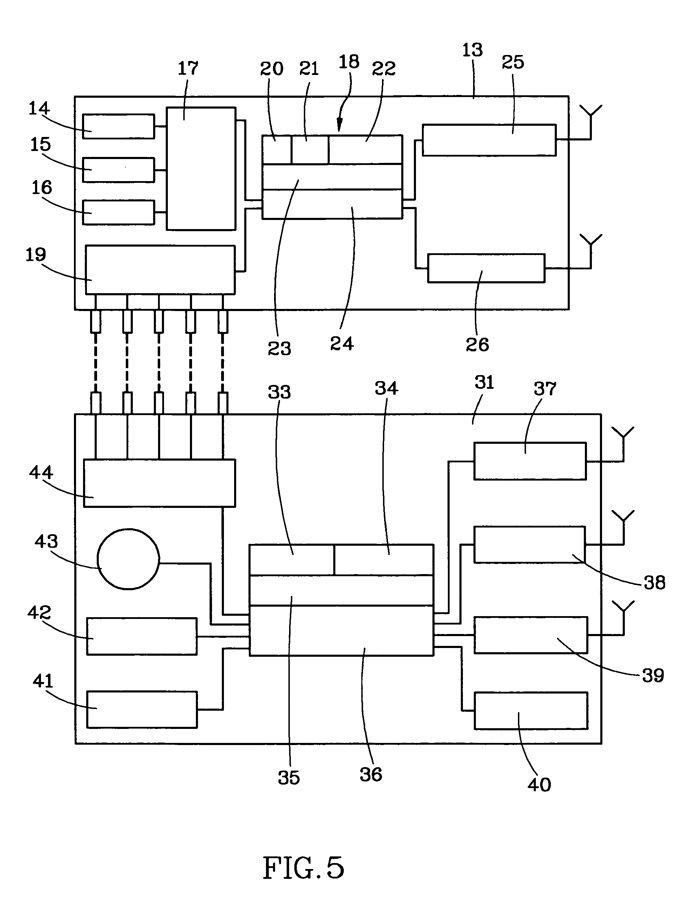

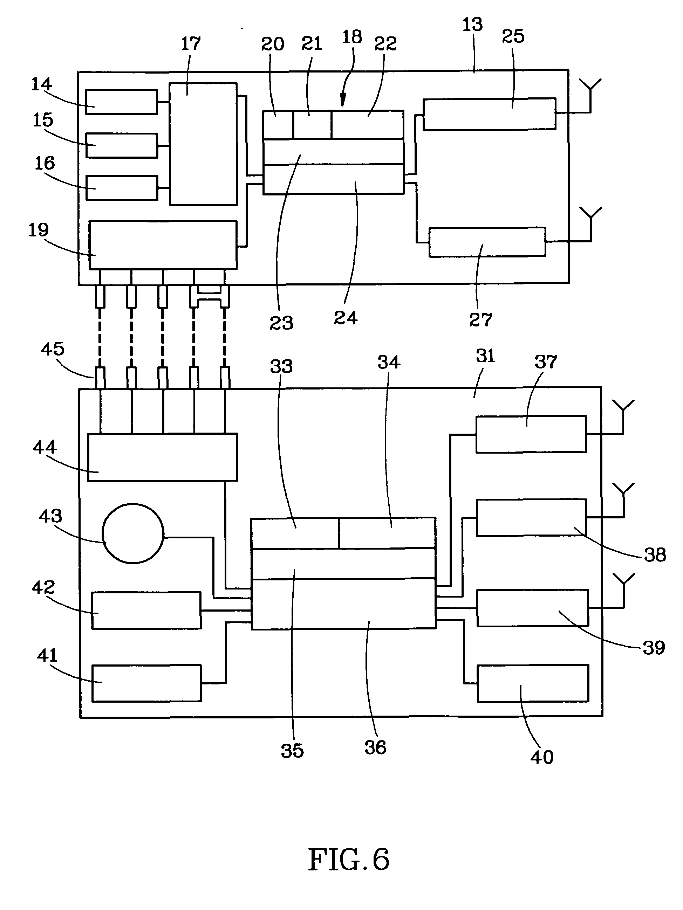

FIG. 5 illustrates the 315MHz blank tire pressure monitoring device connected to the setup tool. FIG. 6 illustrates the 433MHz blank tire pressure monitoring device connected to the setup tool. According to the present invention, the general purpose I/O (input/output) terminal unit **19** of the blank tire pressure monitoring device is connected to the general-purpose I/O terminal unit **44** of the setup tool **30** by means of a wired connection method. After connection between the general purpose I/O (input/output) terminal unit **19** and the general-purpose I/O terminal unit **44,** the user can operate the keyboard **41** of the setup tool **30** to select the desired communication program by inputting the data of the car brand, model year and car model, and then transmit the selected communication program to the blank tire pressure monitoring device. The communication program comprises therein a pressure sensor control program, a temperature sensor control program, an acceleration sensor control program, a power supply information control program, a car body receiver RF and LF communication protocol and a pressure and temperature abnormal pre-warning signal protocol. The communication program is stored in the flash memory **20** of the blank tire pressure monitoring device. After download, separate the blank tire pressure monitoring device from the setup tool **30.** Thus, the setup of the blank tire pressure monitoring device is done, and the blank tire pressure monitoring device can be installed in the car for application. The ID data can be inputted into the blank tire pressure monitoring device by means of a keyboard.
Referring to FIG. 7, in case of a hardware connection error during connection of the blank tire pressure monitoring device for downloading the desired communication program, the setup tool will detect the connection error of the five connection terminal structure, causing the buzzer **43** to buzz. For example, if the 433MHz blank tire pressure monitoring device is connected to the setup tool and the communication program for 315MHz blank tire pressure monitoring device is downloaded, the setup tool will detect the error and gives off a warning signal and displays the error message on the display; namely, the setup tool can detect whether the detection terminal of the blank tire pressure monitoring device electrically conducted with at least one of another four terminals of the blank tire pressure monitoring device or not.

The invention has the advantages: the communication program is loaded to the blank tire pressure monitoring device only when the blank tire pressure monitoring device is to be installed in the car; the communication program can be updated through the Internet so that the communication program installed in the blank tire pressure monitoring device is the latest edition, eliminating the problem of questioning the edition of the communication despite the fabrication date of the blank tire pressure monitoring device. Further, the loaded communication program will be stored in the flash memory and will not disappear in case of a power failure or battery replacement. Further, the five connection terminal design can be used for switching between different frequencies as well as for the purpose of pre-warning. This unique advantage is not seen in any prior art designs.

## Claims

1. A blank tire pressure monitoring device, being **characterized in that** comprising:
a housing (10) having located on one end thereof an air valve (11) and located on an opposite end thereof a plurality of connection terminals (12);
a circuit board (13) mounted inside said housing (10);
a pressure sensor (14) installed in said circuit board (13);
a temperature sensor (15) installed in said circuit board (13);
an acceleration sensor (16) installed in said circuit board (13);
an analog-digital converter (17) installed in said circuit board (13) and electrically connected with said pressure sensor (14), said temperature sensor (15) and said acceleration sensor (16);
a general purpose I/O terminal unit (19) electrically connected with said connection terminals (12) of said housing (10);
an embedded microcontroller module (18) electrically connected with said general purpose I/O terminal unit (19) and said analog-digital converter (17), said embedded microcontroller module (18) comprising therein a flash memory (21), a microcontroller core (23) and a special-function register controller (24);
an LF (low-frequency) receiver (25) electrically connected to said embedded microcontroller module (18); and
a transmitter (26,27) electrically connected to said embedded microcontroller module (18);
said housing (10) has five connection terminals (12); said general purpose I/O terminal unit (19) is electrically connected with the five connection terminals (12) of said housing (10);
said five connection terminals (12) include a power management terminal, a ground terminal, a data program clock terminal, a program data terminal and a detection terminal for frequency differentiating and error prevention control.

2. The blank tire pressure monitoring device as claimed in claim 1, being **characterized in that** said detection terminal is electrically conducted with at least one of another four terminals.

3. The blank tire pressure monitoring device as claimed in claim 1, being **characterized in that** said transmitter (26,27) is a 433MHz transmitter (27).

4. The blank tire pressure monitoring device as claimed in claim 1, being **characterized in that** said embedded microcontroller module (18) further comprises therein an RAM (random access memory) (20) and a ROM (read only memory) (22).

5. A setup tool (30) comprising a circuit board (31), an embedded microcontroller module (32) installed in said circuit board (31), said embedded microcontroller module (32) comprising memory means, a microcontroller core (35) and a special-function register controller (36), and a transmitter (37), a 433MHz receiver (38), a 315MHz receiver (39), a USB port (40), a keyboard (41), a display (42), a buzzer (43) and a general-purpose I/O terminal unit (44) respectively electrically connected with said embedded microcontroller module (32); said general-purpose I/O terminal unit (44) of said setup tool (30) comprises a power management terminal, a ground terminal, a data program clock terminal, a program data terminal and a detection terminal for frequency differentiating and error prevention control (45).

6. A blank tire pressure monitoring device setup method for setting up a blank tire pressure monitoring device having a general purpose I/O terminal unit (19), being **characterized in that** comprising the steps of:
(a) connecting the general purpose I/O terminal unit (19) of said blank tire pressure monitoring device to a general-purpose I/O terminal unit (44) of the setup tool (30) according to claim 5 by means of a wired connection method;
(b) operating said setup tool (30) to select the desired communication program and to transmit the selected communication program to a flash memory (21) of said blank tire pressure monitoring device for enabling the selected communication program to be stored in said blank tire pressure monitoring device; and
(c) separating said setup tool (30) from said blank tire pressure monitoring device for enabling said blank tire pressure monitoring device to be installed in a vehicle tire for application.

7. The blank tire pressure monitoring device setup method as claimed in claim 6, being **characterized in that** said communication program comprises therein a pressure sensor control program, a temperature sensor control program, an acceleration sensor control program, a power supply information control program, a car body receiver RF and LF communication protocol and a pressure and temperature abnormal pre-warning signal protocol.

## Patentansprüche

1. Drucküberwachungsvorrichtung für einen Reifenrohling, umfassend:
ein Gehäuse (10), das an einem Ende davon ein Luftventil (11) angeordnet und an einem abgewandten Ende davon mehrere Verbindungsanschlüsse (12) angeordnet aufweist;
eine Platine (13), die in dem Gehäuse (10) befestigt ist;
einen Drucksensor (14), der auf der Platine (13) montiert ist;
einen Temperatursensor (15), der auf der Platine (13) montiert ist;
einen Beschleunigungssensor (16), der auf der Platine (13) montiert ist;
einen Analog-Digital-Wandler (17), der auf der Platine (13) montiert ist und mit dem Drucksensor (14), dem Temperatursensor (15) und dem Beschleunigungssensor (16) elektrisch verbunden ist;
eine Mehrzweck I/O Bedieneinheit (19), die mit den Verbindungsanschlüssen (12) des Gehäuses (10) elektrisch verbunden ist;
ein eingebettetes Mikrocontrollermodul (18), das mit der Mehrzweck I/O Bedieneinheit (19) und dem Analog-Digital-Wandler (17) elektrisch verbunden ist, worin das eingebettete Mikrocontrollermodul (18) darin einen Flash-Speicher (21), einen Mikrocontrollerkern (23) und einen Sonderfunktionsregistercontroller (24) umfasst;
einen LF (Niederfrequenz) Empfänger (25), der mit dem eingebetteten Mikrocontrollermodul (18) elektrisch verbunden ist; und
einen Sender (26,27), der mit dem eingebetteten Mikrocontrollermodul (18) elektrisch verbunden ist;
worin das Gehäuse (10) fünf Verbindungsanschlüsse (12) aufweist; worin die Mehrzweck I/O Bedieneinheit (19) mit den fünf Verbindungsanschlüssen (12) des Gehäuses (10) elektrisch verbunden ist;
worin die fünf Verbindungsanschlüsse (12) einen Power Managment Anschluss, einen Masse Anschluss, einen Programmdaten-Uhranschluss, einen Programmdatenanschluss und einen Bestimmungsanschluss zur Frequenzunterscheidung und Fehlerverhinderungssteurung umfasst.

2. Drucküberwachungsvorrichtung für einen Reifenrohling nach Anspruch 1, **dadurch gekennzeichnet, dass** der Bestimmungsanschluss mit mindestens einem der anderen vier Anschlüsse elektrisch leitend ausgeführt ist.

3. Drucküberwachungsvorrichtung für einen Reifenrohling nach Anspruch 1, **dadurch gekennzeichnet, dass** der Sender (26,27) ein 433MHz Sender (27) ist.

4. Drucküberwachungsvorrichtung für einen Reifenrohling nach Anspruch 1, **dadurch gekennzeichnet, dass** das eingebettete Mikrocontrollermodul (18) ferner einen RAM (Direktzugriffsspeicher) (20) und einen ROM (Festwertspeicher) (22) darin umfasst.

5. Installationsgerät (30) umfassend eine Platine (31), ein eingebettetes Mikrocontrollermodul (32), das auf der Platine (31) montiert ist, worin das eingebettete Mikrocontrollermodul (32) Speichermittel umfasst, einen Mikrocontrollerkern (35) und einen Sonderfunktionsregistercontroller (36), und einen Sender (37), einen 433MHz Empfänger (38), einen 315MHz Empfänger (39), einen USB Anschluss (40), eine Tastatur (41), eine Anzeige (42), einen Summer (43) und eine Mehrzweck I/O Bedieneinheit (44), die jeweils mit dem eingebetteten Mikrocontrollermodul (32) elektrisch verbunden sind; worin die Mehrzweck I/O Bedieneinheit (44) des Installationsgeräts (30) einen Power Managment Anschluss, einen Masse Anschluss, einen Programmdaten-Uhranschluss, einen Programmdatenanschluss und einen Bestimmungsanschluss zur Frequenzunterscheidung und Fehlerverhinderungssteuerung (45) umfasst.

6. Installationsverfahren für eine Drucküberwachungsvorrichtung für einen Reifenrohling zur Installation einer Drucküberwachungsvorrichtung für einen Reifenrohling mit einer Mehrzweck I/O Bedieneinheit (19), umfassend:
(a) Anschließen der Mehrzweck I/O Bedieneinheit (19) der Drucküberwachungsvorrichtung für einen Reifenrohling an eine Mehrzweck I/O Bedieneinheit (44) des Installationsgeräts (30) nach Anspruch 5 durch eine Leiterverbindungstechnik;
(b) Betreiben des Installationsgeräts (30), um das gewünschte Kommunikationsprogramm auszuwählen und das ausgewählte Kommunikationsprogramm an einen Flash-Speicher (21) der Drucküberwachungsvorrichtung für einen Reifenrohling zu übertragen, damit das ausgewählte Kommunikationsprogramm in der Drucküberwachungsvorrichtung für einen Reifenrohling gespeichert werden kann; und
(c) Trennen des Installationsgeräts (30) von der Drucküberwachungsvorrichtung für einen Reifenrohling, damit die Drucküberwachungsvorrichtung für einen Reifenrohling in einen Fahrzeugreifen zur Anwendung montiert werden kann.

7. Installationsverfahren für eine Drucküberwachungsvorrichtung für einen Reifenrohling nach Anspruch 6, **dadurch gekennzeichnet, dass** das Kommunikationsprogramm darin ein Drucksensorsteuerprogramm, ein Temperatursehsorsteuerprogramm, ein Beschleunigungssensorsteuerprogramm, ein Stromversorgungsinformationssteuerprogramm, ein Karosserie Empfänger RF und LF Kommunikationsprotokoll und Vorwarn-Signalprotokoll für einen abnormalen Druck und Temperatur umfasst.

## Revendications

1. Un dispositif de surveillance de pression de pneumatique **caractérisé en ce qu'**il comprend :
un boîtier (10) comportant une soupape pneumatique (11) disposée à l'une de ses extrémités et une pluralité de bornes de connexion terminales (12) disposées sur extrémité opposée à celle-ci ;
un circuit intégré (13) monté à l'intérieur dudit boîtier (10) ;
un capteur de pression (14) installé sur ledit circuit intégré (13) ;
un capteur de température (15) installé sur ledit circuit intégré (13) ;
un capteur d'accélération (16) installé sur ledit circuit intégré (13) ;
un convertisseur analogique-digital (17) installé sur ledit circuit intégré (13) et
connecté électriquement audit capteur de pression (14), audit capteur de température (15) et audit capteur d'accélération (16) ;
une unité terminale I/O à usage général (19) connecté électriquement auxdites bornes de connexion (12) dudit boîtier (10) ;
un module de micro contrôle embarqué (18) connecté électriquement à ladite unité terminale I/O à usage général (19) et audit convertisseur analogique-digital (17), ledit module de micro contrôle embarqué (18) comprenant en son sein une mémoire flash (21), une base de microcontrôleur (23) et un contrôleur de registre de fonction spéciale (24) ;
un récepteur LF (basse fréquence) (25) connecté électriquement audit module de micro contrôle embarqué (18) ; et
un émetteur (26,27) connecté électriquement audit module de micro contrôle embarqué (18) ;
ledit boîtier (10) comporte cinq bornes de connexion (12), ladite unité terminale I/O à usage général (19) est connectée électriquement aux cinq bornes de connexion (12) dudit boîtier (10) ;
lesdites cinq bornes de connexion (12) comprennent une borne de gestion d'alimentation de courant, une borne de masse, une borne de données de programme d'horloge, une borne de données de programme et une borne de détection pour le contrôle de différenciation de fréquences et de prévention d'erreurs.

2. Le dispositif de contrôle de pression pneumatique tel que revendiqué dans la revendication 1, **caractérisé en ce que** ladite borne de détection est connectée électriquement à au moins une de quatre autres bornes.

3. Le dispositif de contrôle de pression pneumatique tel que revendiqué dans la revendication 1, **caractérisé en ce que** ledit émetteur (26, 27) est un émetteur 433 MHz (27).

4. Le dispositif de contrôle de pression pneumatique tel que revendiqué dans la revendication 1, **caractérisé en ce que** ledit module de contrôle embarqué (18) comprend en outre une RAM (mémoire vive) (20) et une ROM (mémoire morte) (22).

5. Un outil d'installation (30) comprenant un circuit intégré (31), un module de micro contrôle embarqué (32) installé sur ledit circuit intégré (31), ledit module de micro contrôle embarqué (32) comprenant des moyens de mémoire, une base de microcontrôleur (35) et un contrôleur de registre de fonction spéciale (36) et un émetteur (37), un récepteur 433 MHz (38), un récepteur 315 MHz (39), un port USB (40), un clavier (41), un écran (42), un vibreur (43) et une unité terminale I/O à usage général (44) respectivement connectés électriquement audit module de micro contrôle embarqué (32), ladite unité terminale I/O à usage général (44) dudit outil d'installation (30) comprenant une borne de gestion d'alimentation de courant, une borne de masse, une borne de données de programme d'horloge, une borne de données de programme et une borne de détection pour le contrôle de différenciation de fréquences et de prévention d'erreurs (45).

6. Un procédé d'installation d'un dispositif de contrôle de pression pneumatique pour installer un dispositif de contrôle de pression pneumatique comportant une unité terminale I/O à usage général (19), **caractérisé en ce qu'**il comprend les étapes de :
(a) connecter l'unité terminale I/O à usage général (19) dudit dispositif de contrôle de pression pneumatique à une unité terminale I/O à usage général (44) dudit outil d'installation (30) selon la revendication 5 au moyen d'un procédé de connexion par câble ;
(b) faire fonctionner ledit outil d'installation (30) pour sélectionner le programme de communication désiré et transmettre le programme de communication sélectionné à une mémoire flash (21) ) dudit dispositif de contrôle de pression pneumatique pour permettre au programme de communication sélectionné d'être stocké dans ledit dispositif de contrôle de pression pneumatique ; et
(c) séparer ledit outil d'installation (30) dudit dispositif de contrôle de pression pneumatique pour permettre audit dispositif de contrôle de pression pneumatique d'être installé pour utilisation dans un pneumatique de véhicule.

7. Le procédé d'installation d'un dispositif de contrôle de pression pneumatique tel que revendiqué dans la revendication 6, **caractérisé en ce que** ledit programme de communication comprend un programme de contrôle de capteur de pression, un programme de contrôle de capteur de température, un programme de contrôle de capteur d'accélération, un programme de contrôle d'information d'alimentation de courant, un protocole de communication de récepteur RF et LF de corps de véhicule et un protocole de signal de pré alarme de pression et de température anormales.
